# FASCICULE DE BREVET EUROPEEN

(11) **EP 1 577 495 B1**
(45) Date de publication et mention de la délivrance du brevet: **24.09.2008**
(21) Numéro de dépôt: 05290356.4
(22) Date de dépôt: 17.02.2005
(51) Int. Cl.: F01D 5/06, F01D 25/16

(54) **Palier à roulement de turbomachine à encombrement réduit**
Wälzlagereinheit einer Turbomaschine mit reduziertem Platzbedarf
Turbomachine rolling bearing assembly having a reduced space requirement

(30) Priorité: 05.03.2004 FR 0402328
(43) Date de publication de la demande: 21.09.2005
(73) Titulaire: SNECMA, 75015 Paris (FR)
(72) Inventeur: Charier, Gilles, 77130 La Grande Paroisse (FR); Dusserre-Telmon, Guy, 77115 Sivry-Courtry (FR); Marchi, Marc, 77350 Le Mee sur Seine (FR); Mourlan, Jean-Pierre, 75014 Paris (FR); Rosset, Patrice, 77350 Le Mee sur Seine (FR); Zsiga, Zoltan, 77210 Avon (FR)
(74) Mandataire: Joly, Jean-Jacques

(56) Documents cités:
- FR-A- 1 054 379
- US-A- 3 393 533
- US-A- 3 970 398
- US-A- 4 456 425
- US-A- 4 804 288
- US-A- 5 288 210

## Description

### Arrière-plan de l'invention

La présente invention se rapporte au domaine général des paliers à roulement de turbomachine, et vise plus particulièrement un palier à roulement de type supportant en rotation un tourillon haute-pression par rapport à un support fixe lié au carter de la turbomachine.

Dans une turbomachine, le tourillon de la ligne d'arbre du corps haute-pression est généralement supporté en rotation par rapport à un support fixe lié au carter par un palier à roulement à rouleaux.

voir, p. ex, le document US 4 456 425.

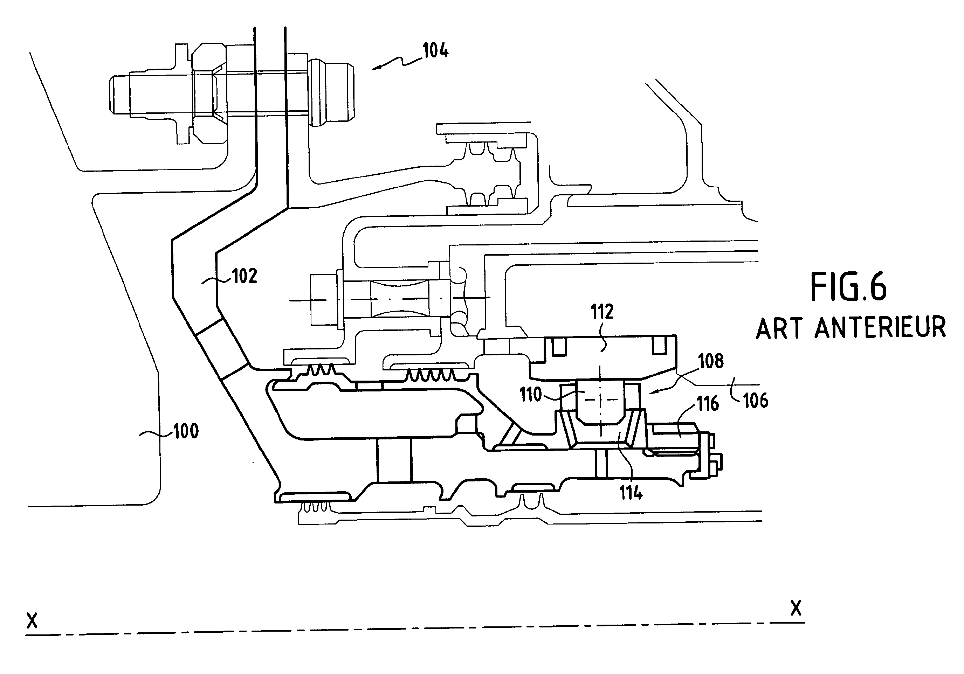

Un tel palier à roulement est décrit en liaison avec la figure 6. Sur cette figure, le corps haute-pression de la turbomachine se compose notamment d'un disque de turbine haute-pression 100 sur lequel sont montées des aubes (non représentées) mobiles autour d'un axe longitudinal X-X de la turbomachine. Un arbre 102, qui est le tourillon de la ligne d'arbre du corps haute-pression de la turbomachine, est fixé sur le disque de turbine haute-pression 100 par l'intermédiaire d'une liaison boulonnée 104. Le tourillon haute-pression 102 est supporté en rotation par rapport à un support fixe 106 lié au carter de la turbomachine par un palier à roulement 108.

Le palier à roulement 108 se compose de rouleaux 110 insérés entre une bague extérieure 112 disposée du côté du support fixe 106 et une bague intérieure 114 disposée du côté du tourillon haute-pression 102. Les bagues extérieure 112 et intérieure 114 forment des pistes de roulement pour les rouleaux 110.

La bague extérieure 112 du palier 108 est fixée directement sur le support fixe 106. Quant à la bague intérieure 114, elle est montée sur une surface externe du tourillon haute-pression 102, au niveau de son extrémité aval. Un écrou de serrage 116 disposé en aval de la bague intérieure 114 permet de maintenir axialement la bague intérieure sur le tourillon haute-pression 102.

Un tel arrangement du palier à roulement présente de nombreux inconvénients. Notamment, l'utilisation d'une bague intérieure rapportée et indépendante du tourillon haute-pression augmente l'encombrement radial du palier à roulement et constitue un supplément de masse. De plus, la présence d'un écrou de serrage disposé en aval de la bague intérieure nécessaire au maintien de la bague intérieure a pour effet d'accroître l'encombrement axial de l'ensemble.

Afin de résoudre ces problèmes, il a été envisagé d'intégrer la bague intérieure du palier à roulement directement au tourillon haute-pression. Cette solution présente également des inconvénients. D'une part, en cas de défaillance du palier à roulement, il est nécessaire de remplacer totalement le tourillon haute-pression, ce qui augmente les coûts. D'autre part, la liaison entre la bague intérieure et le tourillon haute-pression qui est réalisée par soudure bimétallique est une technique qu'il est difficile de maîtriser.

### Objet et résumé de l'invention

La présente invention vise donc à pallier de tels inconvénients en proposant un palier à roulement ayant un encombrement réduit, une masse minimale et de maintenance aisée.

A cet effet, l'invention a pour objet un palier à roulement de turbomachine supportant en rotation un arbre constitué par un tourillon de la ligne d'arbre du corps haute-pression de la turbomachine par rapport à un support fixe lié à un carter de la turbomachine, le palier comprenant des rouleaux insérés entre une bague extérieure disposée du côté du support fixe et une bague intérieure disposée du côté du tourillon haute-pression, caractérisé en ce que la bague intérieure s'étend axialement au-delà d'une extrémité aval du tourillon haute-pression sur lequel elle est fixée par des moyens de serrage, la bague intérieure étant en outre munie de moyens permettant d'assurer son anti-rotation par rapport au tourillon haute-pression.

Dans cette configuration, comme la bague intérieure du palier à roulement n'est pas montée directement sur le tourillon haute-pression, l'encombrement axial et radial du palier peut être réduit. De plus, la bague intérieure étant une pièce indépendante du tourillon haute-pression, il n'est pas nécessaire de remplacer celui-ci en cas de défaillance du palier. La maintenance du palier s'en trouve donc facilitée.

La bague intérieure peut être disposée à l'intérieur du tourillon haute-pression.

Dans ce cas, la bague intérieure peut comporter au moins une encoche destinée à coopérer axialement avec au moins un cran aménagé à l'extrémité aval du tourillon haute-pression de façon à assurer une anti-rotation de la bague intérieure par rapport au tourillon haute-pression.

La bague intérieure peut également comporter une pluralité de cannelures aménagées à une extrémité amont et destinées à coopérer radialement avec des cannelures complémentaires du tourillon haute-pression de façon à assurer une anti-rotation de la bague intérieure par rapport au tourillon haute-pression.

Selon une alternative, la bague intérieure peut être disposée au moins en partie à l'extérieur du tourillon haute-pression. Dans ce cas, le palier peut comporter au moins un pion destiné à s'insérer radialement dans des trous de la bague intérieure et du tourillon haute-pression afin d'assurer une anti-rotation de la bague intérieure par rapport au tourillon haute-pression.

Selon une autre alternative, la bague intérieure peut être disposée dans le prolongement du tourillon haute-pression. Dans ce cas, la bague intérieure peut comporter une pluralité de dents, de préférence de forme trapézoïdale, aménagées à une extrémité amont et destinées à coopérer axialement avec une pluralité de dents complémentaires aménagées à l'extrémité aval du tourillon haute-pression de façon à assurer une anti-rotation de la bague intérieure par rapport au tourillon haute-pression.

La fixation de la bague intérieure sur le tourillon haute-pression peut être réalisée au moyen d'un écrou de serrage.

La présente invention a également pour objet une bague intérieure destinée à un palier à roulement tel que défini précédemment.

La présente invention a encore pour objet un tourillon haute-pression de turbomachine supporté en rotation par un palier à roulement tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe axiale et partielle du corps haute-pression d'une turbomachine muni d'un palier à roulement selon un mode de réalisation de l'invention ;
- les figures 2 à 4 sont des vues en coupe axiale de paliers à roulement selon d'autres modes de réalisation de l'invention ;
- la figure 5 est une vue en coupe selon V de la figure 4 ; et
- la figure 6 représente un palier à roulement connu de l'art antérieur.

### Description détaillée d'un mode de réalisation

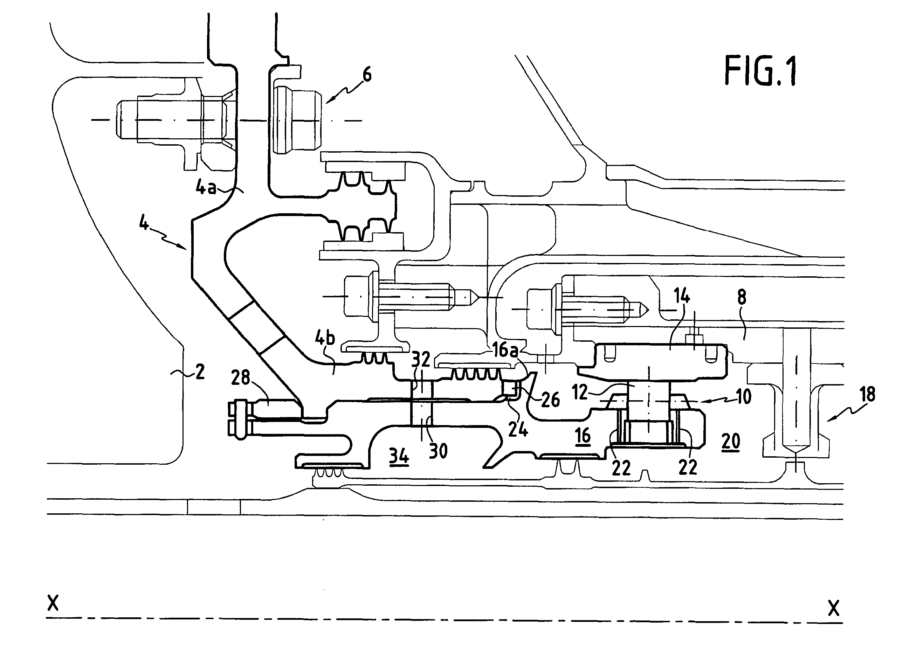

La figure 1 représente en coupe axiale une partie du corps haute-pression d'une turbomachine.

Le corps haute-pression de la turbomachine, d'axe longitudinal X-X, comporte notamment une turbine haute-pression qui se compose d'une pluralité d'aubes mobiles (non représentées) soumises au flux de gaz chauds issus de la chambre de combustion (non représentée). Ces aubes sont montées sur un disque de turbine haute-pression 2 centré sur l'axe X-X.

Le disque de turbine haute-pression 2 entraîne en rotation un arbre 4 qui est le tourillon de la ligne d'arbre du corps haute-pression de la turbomachine.

Le tourillon haute-pression 4 se compose d'une partie 4a sensiblement radiale qui est fixée sur le disque de turbine haute-pression 2 par une liaison boulonnée 6, et d'une partie 4b qui s'étend axialement vers l'aval du disque 2.

Le tourillon haute-pression 4 est supporté en rotation par rapport à un support fixe 8 lié au carter de la turbomachine par l'intermédiaire d'un palier à roulement 10 conforme à l'invention. Afin de tenir aux charges radiales de la turbomachine, ce palier 10 est classiquement de type à roulement à rouleaux.

De façon connue en soi, le palier à roulement 10 se compose de rouleaux 12 insérés entre une bague extérieure 14 disposée du côté du support fixe 8 et une bague intérieure 16 disposée du côté du tourillon haute-pression 4. Les bagues extérieure 14 et intérieure 16 définissent ainsi des pistes de roulement pour les rouleaux 12.

La bague extérieure 14 est typiquement fixée directement sur le support fixe 8 lié au carter de la turbomachine.

Un injecteur à huile 18 est également fixé sur le support fixe 8, en aval du palier à roulement 10. Cet injecteur permet de distribuer de l'huile dans une enceinte à huile 20 dans laquelle est placée le palier à roulement 10. L'huile de cette enceinte est notamment destinée à lubrifier et refroidir les rouleaux 12 du palier à roulement 10.

A cet effet, la bague intérieure 16 du palier à roulement 10 est munie de perçages 22 qui permettent, sous l'effet de la force centrifuge engendrée par la rotation du tourillon haute-pression 4 autour de l'axe X-X, d'acheminer l'huile vers les rouleaux 12 afin de les lubrifier et de les refroidir.

Selon l'invention, la bague intérieure 16 du palier à roulement 10 s'étend axialement au-delà d'une extrémité aval du tourillon haute-pression 4 sur lequel elle est fixée par des moyens de serrage. La bague intérieure 16 est en outre munie de moyens permettant d'assurer son anti-rotation par rapport au tourillon haute-pression 4.

Le positionnement de la bague intérieure 16 au-delà de l'extrémité aval du tourillon haute-pression 4 permet ainsi de réduire la hauteur radiale nécessaire à la mise en place de pistes de roulement des rouleaux 12, et donc l'encombrement radial du palier à roulement 10.

Dans le mode de réalisation de l'invention illustré par la figure 1, la bague intérieure 16 du palier à roulement 10 est disposée à l'intérieur du tourillon haute-pression 4.

Plus précisément, la bague intérieure 16, qui est indépendante du tourillon haute-pression 4, s'étend axialement depuis l'extrémité amont de la partie axiale 4b du tourillon haute-pression et se prolonge au-delà de l'extrémité aval de cette partie axiale.

La bague intérieure 16 comporte en outre au moins une encoche 24 destinée à coopérer axialement avec au moins un cran 26 aménagé à l'extrémité aval du tourillon haute-pression 4 de façon à assurer son anti-rotation par rapport au tourillon haute-pression 4.

Le ou les encoches 24 sont plus précisément formées au niveau d'un épaulement radial 16a de la bague intérieure 16.

Afin d'assurer une fixation de la bague intérieure 16 sur le tourillon haute-pression 4, il est prévu un écrou 28 qui est destiné à être serré sur une extrémité amont de la bague intérieure. A cet effet, l'extrémité amont de la bague intérieure 16 s'étend axialement légèrement au-delà de l'extrémité amont de la partie axiale 4b du tourillon haute-pression 4.

Lorsque serré sur l'extrémité amont de la bague intérieure 16, l'écrou 28 vient en butée contre une extrémité amont de la partie axiale 4b du tourillon haute-pression 4 de façon à éviter tout déplacement axial relatif entre la bague intérieure 16 et le tourillon haute-pression 4.

L'écrou de serrage 28 est positionné en amont du palier à roulement 10, contrairement aux paliers à roulement connus de l'art antérieur pour lesquels l'écrou de serrage est typiquement placé en aval du palier. De la sorte, l'encombrement axial de l'enceinte à huile 20 en aval du palier à roulement 10 peut être réduit.

Dans ce mode de réalisation, on notera que la bague intérieure 16 et le tourillon haute-pression 4 sont chacun munis d'une pluralité de perçages, respectivement 30, 32, qui permettent à l'air de ventilation de circuler depuis une enceinte à air 34 formée en amont de l'enceinte à huile 20 vers l'extérieur. Ces perçages 30, 32 sont bien entendu alignés radialement entre eux.

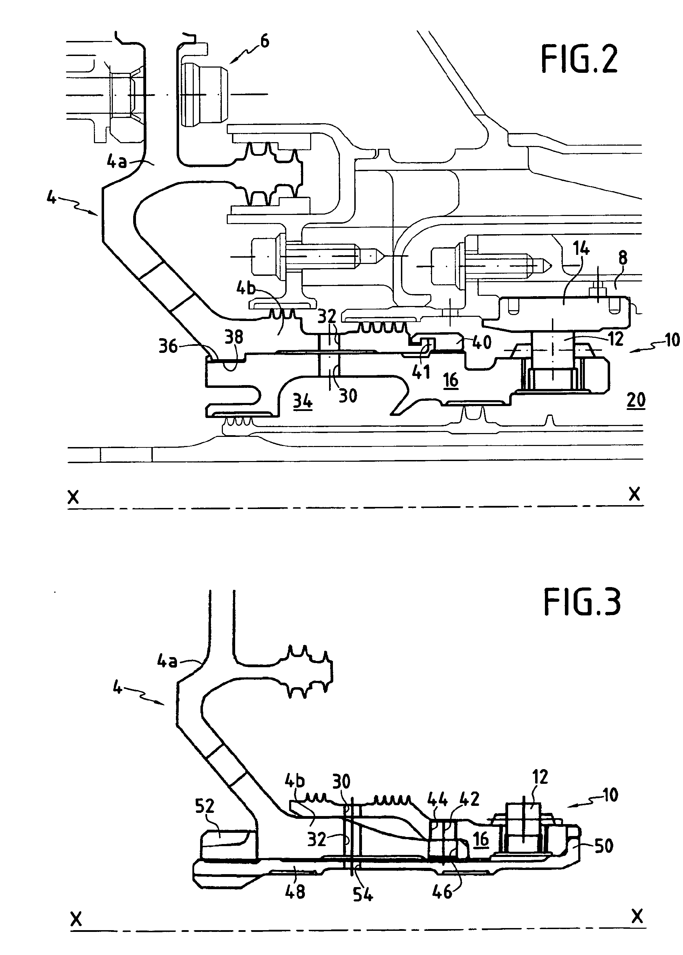

On décrira maintenant d'autres modes de réalisation du palier à roulement selon l'invention, en se référant aux figures 2 à 5.

Dans le mode de réalisation de l'invention illustré par la figure 2, la bague intérieure 16 du palier à roulement 10, qui est indépendante du tourillon haute-pression 4, est également disposée à l'intérieur de celui-ci.

Ce mode de réalisation diffère du précédent par les moyens d'anti-rotation et par les moyens de serrage.

L'anti-rotation de la bague intérieure 16 par rapport au tourillon haute-pression 4 est réalisée par des cannelures 36 formées à une extrémité amont de la bague intérieure, au niveau de sa surface externe, et destinées à coopérer avec des cannelures complémentaires 38 formées à une extrémité amont de la partie axiale 4b du tourillon haute-pression, au niveau de sa surface interne.

Quant à la fixation de la bague intérieure 16 sur le tourillon haute-pression 4, elle est assurée par un écrou de serrage 40 qui est destiné à être serré sur la bague intérieure, au niveau de l'extrémité aval du tourillon haute-pression 4, et plus précisément contre l'extrémité aval de sa partie axiale 4b.

Afin d'assurer un blocage axial de la bague intérieure 16 sur le tourillon haute-pression, il peut être prévu un système à baïonnettes. Avec un tel système, l'écrou de serrage 40 présente un évidement 41 qui vient emprisonner un épaulement radial formé à l'extrémité aval du tourillon haute-pression.

L'écrou de serrage 40 étant ainsi positionné en amont du palier à roulement 10, il est également possible de réduire l'encombrement axial du palier.

Dans le mode de réalisation de l'invention illustré par la figure 3, la bague intérieure 16 du palier à roulement 10 est disposée au moins en partie à l'extérieur du tourillon haute-pression 4.

Plus précisément, la bague intérieure 16, qui est indépendante du tourillon haute-pression 4, comporte une partie amont qui est disposée à l'extérieur de la partie axiale 4b du tourillon haute-pression et qui se prolonge par une partie aval qui s'étend au-delà de cette partie axiale.

La bague intérieure 16 comporte au moins un pion 42 destiné à s'insérer radialement dans des trous 44, 46 respectifs de la bague intérieure 16 et du tourillon haute-pression 4 afin d'assurer une anti-rotation de la bague intérieure par rapport au tourillon haute-pression.

Les trous 44, 46 peuvent être par exemple prévus au niveau de l'extrémité aval de la partie axiale 4b du tourillon haute-pression 4.

Dans ce mode de réalisation, le palier à roulement 10 comporte également une bague supplémentaire 48 disposée à l'intérieur du tourillon haute-pression 4.

Cette bague supplémentaire 48 s'étend axialement depuis une extrémité amont de la partie axiale 4b du tourillon haute-pression 4 et se prolonge jusqu'à l'extrémité aval de la bague intérieure 16.

L'extrémité aval de la bague supplémentaire 48 est munie d'un épaulement radial 50 destiné à venir en appui axial contre une extrémité aval de la bague intérieure 16.

Il est par ailleurs prévu un écrou 52 destiné à être serré sur une extrémité amont de la bague supplémentaire 48 afin d'assurer la fixation de la bague intérieure 16 sur le tourillon haute-pression 4.

A cet effet, l'extrémité amont de la bague supplémentaire 48 s'étend axialement légèrement au-delà de l'extrémité amont de la partie axiale 4b du tourillon haute-pression 4.

Comme pour le mode de réalisation décrit en liaison avec la figure 1, lorsque serré sur l'extrémité amont de la bague supplémentaire 48, l'écrou 52 vient en butée contre une extrémité amont de la partie axiale 4b du tourillon haute-pression 4 de façon à éviter tout déplacement axial relatif entre la bague intérieure 16 et le tourillon haute-pression 4.

L'écrou de serrage 52 est positionné en amont du palier à roulement 10, de sorte qu'il est possible de réduire l'encombrement axial du palier.

On notera qu'afin d'assurer une évacuation efficace de l'air de ventilation depuis l'enceinte à air, la bague supplémentaire 48 doit être également munie d'une pluralité de perçages 54 radialement alignés avec les perçages respectifs 30, 32 de la bague intérieure 16 et du tourillon haute-pression 4.

Par rapport aux modes de réalisation précédents, le palier à roulement décrit en liaison avec la figure 3 présente l'avantage de nécessiter une bague intérieure plus simple à réaliser.

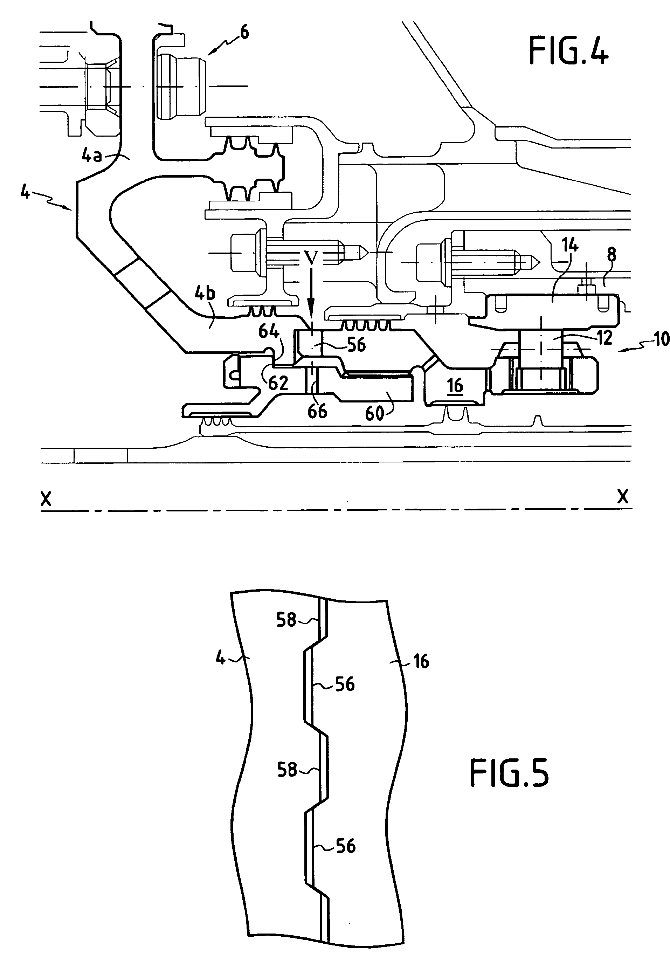

Dans le mode de réalisation de l'invention illustré par les figures 4 et 5, la bague intérieure 16 du palier à roulement 10, qui est indépendante du tourillon haute-pression 4 est disposée dans le prolongement de celui-ci, et plus particulièrement dans le prolongement de sa partie axiale 4b.

Afin d'assurer son anti-rotation par rapport au tourillon haute-pression 4, la bague intérieure 16 comporte une pluralité de dents 56 aménagées à son extrémité amont.

Ces dents 56 sont destinées à coopérer axialement avec une pluralité de dents complémentaires 58 aménagées à l'extrémité aval du tourillon haute-pression, et plus particulièrement à l'extrémité aval de sa partie axiale 4b.

La fixation de la bague intérieure 16 sur le tourillon haute-pression 4 est obtenue par un écrou de serrage 60 qui est destiné à être serré sur une extrémité amont de la bague intérieure 16.

L'écrou de serrage 60 est plus particulièrement disposé à l'intérieur du tourillon haute-pression 4 et de la bague intérieure 16, avec son filetage aménagé sur sa surface externe.

Au niveau de son extrémité amont, l'écrou 60 présente un épaulement radial 62. Lors du serrage de l'écrou 60 sur la bague intérieure 16, l'épaulement 62 vient en appui axial contre un épaulement radial correspondant 64 du tourillon haute-pression 4 de façon à éviter tout déplacement axial relatif entre la bague intérieure et le tourillon haute-pression 4.

Le positionnement de l'écrou de serrage 60 en amont du palier à roulement 10 permet de réduire l'encombrement axial du palier.

Comme illustré sur la figure 5, les dents 56, 58 de la bague intérieure 16 et du tourillon haute-pression 4 forment de préférence un accouplement de type Curvic®.

L'accouplement de type Curvic® se caractérise en ce que l'entraînement est réalisé à l'aide de cannelures axiales à denture trapézoïdale. Sur la figure 5, on remarque bien que les dents 56, 58 sont de forme trapézoïdale.

Ce type d'accouplement est particulièrement avantageux en ce qu'il permet une circulation de l'air à travers la denture 56, 58. Dans la présente application, il est ainsi possible de faire circuler l'air de ventilation provenant de l'enceinte à air au travers de cet accouplement. Il est par ailleurs nécessaire que l'écrou de serrage 60 présente une pluralité de perçages 66 alignés radialement avec la denture 56, 58 de l'accouplement.

Un autre avantage de ce type d'accouplement réside dans le fait que le centrage de la bague intérieure 16 sur le tourillon haute-pression 4 se trouve facilité lors de l'assemblage du palier à roulement 10.

## Revendications

1. Palier à roulement (10) de turbomachine supportant en rotation un arbre (4) constitué par un tourillon de la ligne d'arbre du corps haute-pression de la turbomachine par rapport à un support fixe (8) lié à un carter de la turbomachine, ledit palier (10) comprenant des rouleaux (12) insérés entre une bague extérieure (14) disposée du côté du support fixe (8) et une bague intérieure (16) disposée du côté du tourillon haute-pression (4) ladite bague intérieure (16) étant en outre munie de moyens permettant d'assurer son anti-rotation par rapport au tourillon haute-pression (4), **caractérisé en ce que** la bague intérieure (16) s'étend axialement au-delà d'une extrémité aval du tourillon haute-pression (4) sur lequel elle est fixée par des moyens de serrage.

2. Palier selon la revendication 1, **caractérisé en ce que** la bague intérieure (16) est disposée à l'intérieur du tourillon haute-pression (4).

3. Palier selon la revendication 2, **caractérisé en ce que** la bague intérieure (16) comporte au moins une encoche (24) destinée à coopérer axialement avec au moins un cran (26) aménagé à l'extrémité aval du tourillon haute-pression (4) de façon à assurer une anti-rotation de la bague intérieure par rapport au tourillon haute-pression.

4. Palier selon la revendication 3, **caractérisé en ce qu'**il comporte un écrou (28) destiné à être serré sur une extrémité amont de la bague intérieure (16) afin d'assurer sa fixation sur le tourillon haute-pression (4).

5. Palier selon la revendication 2, **caractérisé en ce que** la bague intérieure (16) comporte une pluralité de cannelures (36) aménagées à une extrémité amont et destinées à coopérer radialement avec des cannelures complémentaires (38) du tourillon haute-pression (4) de façon à assurer une anti-rotation de la bague intérieure par rapport au tourillon haute-pression.

6. Palier selon la revendication 5, **caractérisé en ce qu'**il comporte un écrou (40) destiné à être serré sur la bague intérieure (16), au niveau de l'extrémité aval du tourillon haute-pression (4), afin d'assurer la fixation de la bague intérieure sur le tourillon haute-pression.

7. Palier selon la revendication 1, dans lequel la bague intérieure (16) est disposée au moins en partie à l'extérieur du tourillon haute-pression (4), **caractérisé en ce qu'**il comporte au moins un pion (42) destiné à s'insérer radialement dans des trous (44, 46) de la bague intérieure et du tourillon haute-pression afin d'assurer une anti-rotation de la bague intérieure par rapport au tourillon haute-pression.

8. Palier selon la revendication 7, **caractérisé en ce qu'**il comporte une bague supplémentaire (48) disposée à l'intérieur du tourillon haute-pression (4) et dont une extrémité aval est munie d'un épaulement radial (50) destiné à venir en appui axial contre une extrémité aval de la bague intérieure (16), et un écrou (52) destiné à être serré sur une extrémité amont de la bague supplémentaire (48) de façon à assurer la fixation de la bague intérieure sur le tourillon haute-pression.

9. Palier selon la revendication 1, **caractérisé en ce que** la bague intérieure (16) est disposée dans le prolongement du tourillon haute-pression (4).

10. Palier selon la revendication 9, **caractérisé en ce que** la bague intérieure (16) comporte une pluralité de dents (56) aménagées à une extrémité amont et destinées à coopérer axialement avec une pluralité de dents complémentaires (58) aménagées à l'extrémité aval du tourillon haute-pression (4) de façon à assurer une anti-rotation de la bague intérieure par rapport au tourillon haute-pression.

11. Palier selon la revendication 10, **caractérisé en ce qu'**il comporte un écrou (60) destiné à être serré sur une extrémité amont de la bague intérieure (16) afin d'assurer sa fixation sur le tourillon haute-pression.

12. Palier selon l'une des revendications 10 et 11, **caractérisé en ce que** les dents respectives (56, 58) de la bague intérieure (16) et du tourillon haute-pression (4) sont de forme trapézoïdale.

13. Bague intérieure (16) pour palier à roulement (10) de turbomachine selon l'une quelconque des revendications 1 à 12.

14. Tourillon (4) d'une ligne d'arbre du corps haute-pression d'une turbomachine, **caractérisé en ce qu'**il est supporté en rotation par rapport à un support fixe (8) lié à un carter de la turbomachine par un palier à roulement (10) selon l'une quelconque des revendications 1 à 12.

## Claims

1. A turbomachine roller bearing (10) that supports in rotation a shaft (4) constituted by a trunnion of a shaft line of a high-pressure spool of a turbomachine relative to a stationary support (8) that is connected to a casing of the turbomachine, said bearing (10) comprising rollers (12) inserted between an outer ring (14) disposed on the side of the stationary support (8) and an inner ring (16) disposed on the side of the high-pressure trunnion (4), said inner ring (16) also being provided with anti-rotation means for preventing said inner ring from rotating relative to the high-pressure trunnion (4), said roller bearing being **characterized in that** the inner ring (16) extends axially beyond a downstream end of the high-pressure trunnion (4) to which it is secured by clamping means.

2. A bearing according to claim 1, **characterized in that** the inner ring (16) is disposed inside the high-pressure trunnion (4).

3. A bearing according to claim 2, **characterized in that** the inner ring (16) includes at least one notch (24) that is intended to cooperate axially with at least one catch (26) arranged in the downstream end of the high-pressure trunnion (4), so as to prevent said inner ring from rotating relative to the high-pressure trunnion (4).

4. A bearing according to claim 3, **characterized in that** it includes a nut (28) for being clamped against an upstream end of the inner ring (16), in order to secure it to the high-pressure trunnion (4).

5. A bearing according to claim 2, **characterized in that** the inner ring (16) includes a plurality of splines (36) arranged at an upstream end and intended to cooperate radially with complementary splines (38) of the high-pressure trunnion (4), so as to prevent said inner ring from rotating relative to the high-pressure trunnion.

6. A bearing according to claim 5, **characterized in that** it includes a nut (40) for being clamped onto the inner ring (16), at the downstream end of the high-pressure trunnion (4), in order to secure the inner ring to the high-pressure trunnion.

7. A bearing according to claim 1, in which at least a portion of the inner ring (16) is disposed outside the high-pressure trunnion (4), said bearing being **characterized in that** it includes at least one peg (42) for being inserted radially into holes (44, 46) respectively in the inner ring (16) and in the high-pressure trunnion, in order to prevent the inner ring from rotating relative to the high-pressure trunnion.

8. A bearing according to claim 7, **characterized in that** it includes an additional ring (48) disposed inside the high-pressure trunnion (4) and having a downstream end that is provided with a radial shoulder (50) for bearing axially against a downstream end of the inner ring (16), and also includes a nut (52) for being clamped against an upstream end of the additional ring (48) so as to secure the inner ring to the high-pressure trunnion.

9. A bearing according to claim 1, **characterized in that** the inner ring (16) is disposed in line with the high-pressure trunnion (4).

10. A bearing according to claim 9, **characterized in that** the inner ring (16) includes a plurality of teeth (56) arranged at an upstream end and intended to cooperate axially with a plurality of complementary teeth (58) arranged at the downstream end of the high-pressure trunnion (4), so as to prevent said inner ring from rotating relative to the high-pressure trunnion.

11. A bearing according to claim 10, **characterized in that** it includes a nut (60) for being clamped against an upstream end of the inner ring (16) in order to secure it to the high-pressure trunnion (4).

12. A bearing according to claim 10 or claim 11, **characterized in that** the respective teeth (56, 58) of the inner ring (16) and of the high-pressure trunnion (4) are of trapezoidal shape.

13. An inner ring (16) for a turbomachine roller bearing (10,) according to any one of claims 1 to 12.

14. A trunnion (4) of a shaft line of the high-pressure spool of a turbomachine, said trunnion being **characterized in that** it is supported by a roller bearing (10) according to any one of claims 1 to 12 to rotate relative to a stationary support (8) that is connected to a casing of the turbomachine.

## Patentansprüche

1. Wälzlager (10) einer Turbomaschine, das eine Welle (4), die von einem Zapfen des Wellenstrangs des Hochdruckkörpers der Turbomaschine gebildet ist, gegenüber einem festen Träger (8), der mit einem Gehäuse der Turbomaschine verbunden ist, drehbar lagert, wobei das Lager (10) Rollen (12) aufweist, die zwischen einem Außenring (14), welcher auf der Seite des festen Trägers (8) angeordnet ist, und einem Innenring (16), der auf der Seite des Hochdruckzapfens (4) angeordnet ist, eingefügt sind, wobei der Innenring (16) ferner mit Mitteln ausgestattet ist, die ermöglichen, dessen Drehsicherung gegenüber dem Hochdruckzapfen (4) zu gewährleisten, **dadurch gekennzeichnet, daß** sich der Innenring (16) über ein stromabwärtiges Ende des Hochdruckzapfens (4), an dem er mit Hilfe von Klemmitteln befestigt ist, axial hinaus erstreckt.

2. Lager nach Anspruch 1, **dadurch gekennzeichnet, daß** der Innenring (16) innerhalb des Hochdruckzapfens (4) angeordnet ist.

3. Lager nach Anspruch 2, **dadurch gekennzeichnet, daß** der Innenring (16) wenigstens eine Nut (24) aufweist, die dazu bestimmt ist, mit wenigstens einer am stromabwärtigen Ende des Hochdruckzapfens (4) ausgebildeten Raste (26) axial zusammenzuwirken, um eine Drehsicherung des Innenrings gegenüber dem Hochdruckzapfen zu gewährleisten.

4. Lager nach Anspruch 3, **dadurch gekennzeichnet, daß** es eine Mutter (28) aufweist, die dazu bestimmt ist, an einem stromaufwärtigen Ende des Innenrings (16) festgezogen zu werden, um dessen Befestigung an dem Hochdruckzapfen (4) sicherzustellen.

5. Lager nach Anspruch 2, **dadurch gekennzeichnet, daß** der Innenring (16) eine Vielzahl von Rillen (36) aufweist, die an einem stromaufwärtigen Ende ausgebildet und dazu bestimmt sind, mit ergänzenden Rillen (38) des Hochdruckzapfens (4) radial zusammenzuwirken, um eine Drehsicherung des Innenrings gegenüber dem Hochdruckzapfen zu gewährleisten.

6. Lager nach Anspruch 5, **dadurch gekennzeichnet, daß** es eine Mutter (40) aufweist, die dazu bestimmt ist, an dem Innenring (16) im Bereich des stromabwärtigen Endes des Hochdruckzapfens (4) festgezogen zu werden, um die Befestigung des Innenrings an dem Hochdruckzapfen sicherzustellen.

7. Lager nach Anspruch 1, bei dem der Innenring (16) wenigstens teilweise außerhalb des Hochdruckzapfens (4) angeordnet ist, **dadurch gekennzeichnet, daß** es wenigstens einen Stift (42) umfaßt, welcher dazu bestimmt ist, in Löcher (44, 46) des Innenrings und des Hochdruckzapfens radial einzugreifen, um eine Drehsicherung des Innenrings gegenüber dem Hochdruckzapfen zu gewährleisten.

8. Lager nach Anspruch 7, **dadurch gekennzeichnet, daß** es einen zusätzlichen Ring (48), der innerhalb des Hochdruckzapfens (4) angeordnet ist und von dem ein stromabwärtiges Ende mit einer radialen Schulter (50) versehen ist, die dazu bestimmt ist, an einem stromabwärtigen Ende des Innenrings (16) in axiale Anlage zu gelangen, sowie eine Mutter (52) aufweist, welche dazu bestimmt ist, an einem stromaufwärtigen Ende des zusätzlichen Rings (48) festgezogen zu werden, um die Befestigung des Innenrings an dem Hochdruckzapfen sicherzustellen.

9. Lager nach Anspruch 1, **dadurch gekennzeichnet, daß** der Innenring (16) in der Verlängerung des Hochdruckzapfens (4) angeordnet ist.

10. Lager nach Anspruch 9, **dadurch gekennzeichnet, daß** der Innenring (16) eine Vielzahl von Zähnen (56) aufweist, die an einem stromaufwärtigen Ende angeordnet und dazu bestimmt sind, mit einer Vielzahl ergänzender Zähne (58), die am stromabwärtigen Ende des Hochdruckzapfens (4) ausgebildet sind, axial zusammenzuwirken, um eine Drehsicherung des Innenrings gegenüber dem Hochdruckzapfen zu gewährleisten.

11. Lager nach Anspruch 10, **dadurch gekennzeichnet, daß** es eine Mutter (60) aufweist, die dazu bestimmt ist, an einem stromaufwärtigen Ende des Innenrings (16) festgezogen zu werden, um dessen Befestigung an dem Hochdruckzapfen sicherzustellen.

12. Lager nach einem der Ansprüche 10 und 11, **dadurch gekennzeichnet, daß** die jeweiligen Zähne (56, 58) des Innenrings (16) und des Hochdruckzapfens (4) trapezförmig ausgebildet sind.

13. Innenring (16) für ein Wälzlager (10) einer Turbomaschine nach einem der Ansprüche 1 bis 12.

14. Zapfen (4) eines Wellenstrangs des Hochdruckkörpers einer Turbomaschine, **dadurch gekennzeichnet, daß** er mittels eines Wälzlagers (10) nach einem der Ansprüche 1 bis 12 gegenüber einem festen Träger (8), welcher mit einem Gehäuse der Turbomaschine verbunden ist, drehbar gelagert ist.
